(19) Europäisches Patentamt
European Patent Office
Office européen des brevets

(11) **EP 4 227 364 A1**

(12) **EUROPEAN PATENT APPLICATION**

(43) Date of publication:
**16.08.2023 Bulletin 2023/33**

(21) Application number: **23155541.8**

(22) Date of filing: **08.02.2023**

(51) International Patent Classification (IPC):
**C08L 67/02** (2006.01)    **C08L 23/08** (2006.01)

(52) Cooperative Patent Classification (CPC):
(C-Sets available)
**C08L 67/02**                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.02.2022 KR 20220017415**

(71) Applicant: **Lotte Chemical Corporation
Seoul, 05551 (KR)**

(72) Inventors:
• **PARK, Chan Moo**
  **16073 Gyeonggi-do (KR)**
• **LEE, Sang Hwa**
  **16073 Gyeonggi-do (KR)**
• **JANG, Cheol Hoon**
  **16073 Gyeonggi-do (KR)**
• **LEE, Bong Jae**
  **16073 Gyeonggi-do (KR)**

(74) Representative: **Germain Maureau
12, rue Boileau
69006 Lyon (FR)**

(54) **THERMOPLASTIC RESIN COMPOSITION AND ARTICLE PRODUCED THEREFROM**

(57)    A thermoplastic resin composition and an article produced therefrom. The thermoplastic resin composition includes 100 parts by weight of a polybutylene terephthalate resin, 3 parts by weight to 33 parts by weight of a polycarbonate resin, 60 parts by weight to 120 parts by weight of glass fiber, and 1 part by weight to 9 parts by weight of a glycidyl methacrylate-modified polyolefin, wherein the glass fiber and the glycidyl methacrylate-modified polyolefin are present in a weight ratio of 1:0.02 to 1:0.12. The thermoplastic resin composition has good properties in terms of glass adhesion, metal bonding, impact resistance, and balance therebetween.

EP 4 227 364 A1

(52) Cooperative Patent Classification (CPC): (Cont.)

C-Sets
**C08L 67/02, C08K 7/14, C08L 23/0884,
C08L 69/00**

## Description

### Field of the Invention

The present invention relates to a thermoplastic resin composition and an article produced therefrom. More particularly, the present invention relates to a thermoplastic resin composition having good properties in terms of glass adhesion, metal bonding, impact resistance, and balance therebetween, and an article produced therefrom.

### Description of the Related Art

As engineering plastics, a polyester resin and a blend of a polyester resin and a polycarbonate resin exhibit useful properties and are applied to various fields including interior and exterior materials for electric/electronic products. However, the polyester resin has problems of low crystallization rate, low mechanical strength, and low impact strength.

Thus, various attempts have been made to improve mechanical properties including impact resistance and rigidity of the polyester resin by adding additives such as inorganic fillers to the polyester resin. For example, polybutylene terephthalate (PBT) resins reinforced by inorganic fillers, such as glass fiber and the like, are frequently used as materials for automobile components and the like. However, since such materials have a limitation in improvement in impact resistance, rigidity, and the like, there is a problem of deterioration in glass adhesion, metal bonding, and the like.

Therefore, there is a need for development of a thermoplastic resin composition having good properties in terms of glass adhesion, metal bonding, impact resistance, and balance therebetween.

The background technique of the present invention is disclosed in Korean Patent Registration No. 10-0709878 and the like.

### Summary of the Invention

It is one aspect of the present invention to provide a thermoplastic resin composition having good properties in terms of glass adhesion, metal bonding, impact resistance, and balance therebetween, and an article produced therefrom.

One aspect of the present invention relates to a thermoplastic resin composition. The thermoplastic resin composition includes: 100 parts by weight of a polybutylene terephthalate resin; 3 parts by weight to 33 parts by weight of a polycarbonate resin; 60 parts by weight to 120 parts by weight of glass fiber; and 1 part by weight to 9 parts by weight of a glycidyl methacrylate-modified polyolefin, wherein the glass fiber and the glycidyl methacrylate-modified polyolefin are present in a weight ratio of 1 :0.02 to 1:0.12.

The polybutylene terephthalate resin may have an inherent viscosity [$\eta$] of 0.5 dl/g to 1.5 dl/g, as measured in accordance with ASTM D2857.

The polycarbonate resin may have a weight average molecular weight of 10,000 g/mol to 50,000 g/mol, as measured by gel permeation chromatography (GPC).

The glycidyl methacrylate-modified polyolefin may include 4 wt% to 15 wt% of glycidyl methacrylate.

The thermoplastic resin composition may have an average potential energy of 700 mJ to 870 mJ, as calculated by averaging potential energy values measured upon detachment of five specimens each having a size of 50 mm × 50 mm × 4 mm from a glass substrate having a size of 25 mm × 25 mm × 3 mm by dropping a dart having a weight of 50 g to 900 g onto the specimens from a height of 5 cm to 100 cm according to the DuPont drop test method, in which a urethane-based bonding agent (H.B. Fuller Co., Ltd., EH9777BS) is applied to a size of 15 mm × 15 mm × 1 mm on each of the specimens at 110°C and the glass substrate is bonded to the bonding agent, followed by curing under conditions of 25°C and 50% RH for 72 hours.

The thermoplastic resin composition may have a metal bonding strength of 35 MPa to 50 MPa, as measured on an aluminum-based metal specimen in accordance with ISO 19095.

The thermoplastic resin composition may have a notched Izod impact strength of 9 kgf·cm/cm to 20 kgf cm/cm, as measured on a 1/8" specimen in accordance with ASTM D256.

Another aspect of the present invention relates to an article. The article is formed of the thermoplastic resin composition according to the present invention.

A further aspect of the present invention relates to a composite material. The composite material includes a plastic member as the article according to the present invention; a metal member adjoining the plastic member; and a glass member bonded to the plastic member.

### Detailed Description of the Invention

Hereinafter, embodiments of the present invention will be described in detail.

A thermoplastic resin composition according to the present invention includes: (A) a polybutylene terephthalate resin; (B) a polycarbonate resin; (C) glass fiber; and (D) a glycidyl methacrylate-modified polyolefin.

As used herein to represent a specific numerical range, "a to b" means "$\geq$ a and $\leq$ b".

(A) Polybutylene terephthalate resin

The polybutylene terephthalate (PBT) resin according to the present invention serves to improve properties of the thermoplastic resin composition in terms of glass adhesion, metal bonding, impact resistance, and balance therebetween together with the polycarbonate resin and a specific ratio of glass fiber to glycidyl methacrylate-modified polyolefin, and may be a polybutylene terephthalate resin used in typical thermoplastic resin compositions. For example, the polybutylene terephthalate resin may be prepared through polycondensation of a dicarboxylic component, such as terephthalic acid (TPA) and the like, and a diol component, such as 1,3-butane diol, 1,4-butane diol, and the like.

In some embodiments, the polybutylene terephthalate resin may have an inherent viscosity $[\eta]$ of 0.5 dl/g to 1.5 dl/g, for example, 0.7 dl/g to 1.3 dl/g, as measured in accordance with ASTM D2857. In some embodiments, the polybutylene terephthalate resin may have an inherent viscosity $[\eta]$ of about 0.5, 0.6, 0.7, 0.8, 0.9, 1.0, 1.1, 1.2, 1.3, 1.4, or 1.5 dl/g. Further, according to some embodiments, the polybutylene terephthalate resin may have an inherent viscosity $[\eta]$ of from about any of the foregoing values to about any other of the foregoing values. Within this range, the thermoplastic resin composition can exhibit good properties in terms of mechanical properties, metal bonding, injection processability, and the like.

(B) Polycarbonate resin

The polycarbonate resin according to the present invention serves to improve the properties of the thermoplastic resin composition in terms of glass adhesion, metal bonding, impact resistance, and balance therebetween together with the polybutylene terephthalate resin and a specific ratio of glass fiber to glycidyl methacrylate-modified polyolefin and may be a polycarbonate resin used in typical thermoplastic resin compositions. For example, the polycarbonate resin may be an aromatic polycarbonate resin prepared by reacting diphenols (aromatic diol compounds) with a precursor, such as phosgene, halogen formate, or carbonate diester.

In some embodiments, the diphenols may include, for example, 4,4'-biphenol, 2,2-bis(4-hydroxyphenyl)-propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis-(3,5-dichloro-4-hydroxyphenyl)propane, 2,2-bis(3-methyl-4-hydroxyphenyl)propane, and 2,2-bis(3,5-dimethyl-4-hydroxyphenyl)propane, without being limited thereto. For example, the diphenols may be 2,2-bis(4-hydroxyphenyl)propane, 2,2-bis(3,5-dichloro-4-hydroxyphenyl)propane, 2,2-bis(3-methyl-4-hydroxyphenyl)propane, 2,2-bis(3,5-dimethyl-4-hydroxyphenyl)propane, or 1,1-bis(4-hydroxyphenyl)cyclohexane, specifically 2,2-bis(4-hydroxyphenyl)propane, which is also referred to as bisphenol-A.

In some embodiments, the polycarbonate resin may be a branched polycarbonate resin. For example, the polycarbonate resin may be a polycarbonate resin prepared by adding a tri- or higher polyfunctional compound, specifically, a tri- or higher valent phenol groupcontaining compound, in an amount of 0.05 mol% to 2 mol% based on the total number of moles of the diphenols used in polymerization.

In some embodiments, the polycarbonate resin may be a homopolycarbonate resin, a copolycarbonate resin, or a blend thereof. The polycarbonate resin may be partly or completely replaced by an aromatic polyester-carbonate resin prepared by polymerization in the presence of an ester precursor, for example, a bifunctional carboxylic acid.

In some embodiments, the polycarbonate resin may have a weight average molecular weight (Mw) of 10,000 g/mol to 50,000 g/mol, for example, 20,000 g/mol to 40,000 g/mol, as measured by gel permeation chromatography (GPC). Within this range, the thermoplastic resin composition can have good impact resistance, fluidity (processability), and the like.

In some embodiments, the polycarbonate resin may be present in an amount of 3 parts by weight to 33 parts by weight, for example, 5 parts by weight to 30 parts by weight, relative to 100 parts by weight of the polybutylene terephthalate resin. In some embodiments, the thermoplastic resin composition may include the polycarbonate resin in an amount of about 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, or 33 parts by weight, relative to about 100 parts by weight of the polybutylene terephthalate resin. Further, according to some embodiments, the polycarbonate resin can be present in an amount of from about any of the foregoing amounts to about any other of the foregoing amounts. If the content of the polycarbonate resin is less than 3 parts by weight relative to 100 parts by weight of the polybutylene terephthalate resin, the thermoplastic resin composition can suffer from deterioration in glass adhesion, impact resistance, and the like, and if the content of the polycarbonate resin exceeds 33 parts by weight, the thermoplastic resin composition can suffer from deterioration in metal bonding, fluidity, and the like.

(C) Glass fiber

According to the present invention, the glass fiber serves to improve the properties of the thermoplastic resin composition in terms of glass adhesion, metal bonding, impact resistance, and balance therebetween together with the polybutylene terephthalate resin, the polycarbonate resin and a specific content of glycidyl methacrylate-modified polyolefin and may be glass fiber used in typical thermoplastic resin compositions.

In some embodiments, the glass fiber may have a fibrous shape and may have various cross-sectional shapes, such as circular, elliptical, and rectangular shapes. For example, fibrous glass fiber having circular and/or rectangular cross-sectional shapes may be preferred in terms of mechanical properties.

In some embodiments, the glass fiber having a circular cross-section may have a cross-sectional diameter of 5 μm to 20 μm and a pre-processing length of 2 mm to 20 mm, as measured using a scanning electron microscope (SEM), and the glass fiber having a rectangular cross-section may have an aspect ratio (a ratio of a long-side length to a short-side length on a cross-section) of 1.5 to 10, a short-side length of 2 μm to 10 μm, and a pre-processing length of 2 mm to 20 mm, as measured using the scanning electron microscope. Within this range, the thermoplastic resin composition can have good rigidity, processability, and the like.

In some embodiments, the glass fiber may be subjected to surface treatment with a typical surface treatment agent. The surface treatment agent may include a silane compound, a urethane compound, and an epoxy compound, without being limited thereto.

In some embodiments, the glass fiber may be present in an amount of 60 parts by weight to 120 parts by weight, for example, 70 parts by weight to 110 parts by weight, relative to 100 parts by weight of the polybutylene terephthalate resin. In some embodiments, the thermoplastic resin composition may include the glass fiber in an amount of about 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, or 120 parts by weight, relative to about 100 parts by weight of the polybutylene terephthalate resin. Further, according to some embodiments, the glass fiber can be present in an amount of from about any of the foregoing amounts to about any other of the foregoing amounts. If the content of the glass fiber is less than 60 parts by weight relative to 100 parts by weight of the polybutylene terephthalate resin, the thermoplastic resin composition can suffer from deterioration in impact resistance, fluidity, and the like, and if the content of the glass fiber exceeds 120 parts by weight, the thermoplastic resin composition can suffer from deterioration in glass adhesion, metal bonding, and the like.

(D) Glycidyl methacrylate-modified polyolefin

According to the present invention, the glycidyl methacrylate-modified polyolefin serves to improve the properties of the thermoplastic resin composition in terms of glass adhesion, metal bonding, impact resistance, and balance therebetween together with the polybutylene terephthalate resin, the polycarbonate resin and a specific content of glass fiber, and may be prepared through polymerization of a glycidyl methacrylate compound containing a reactive functional group with a polyolefin (olefin homopolymer, olefin copolymer, olefin-(meth)acrylate copolymer, and the like).

In some embodiments, the glycidyl methacrylate-modified polyolefin may include 4 wt% to 15 wt%, for example, 5 wt% to 12 wt%, of glycidyl methacrylate. In some embodiments, the glycidyl methacrylate-modified polyolefin may include glycidyl methacrylate in an amount of about 4, 5, 6, 7, 8, 9, 10, 11, 12, 13, 14, or 15 wt%, based on the total weight (100 wt%) of the glycidyl methacrylate-modified polyolefin. Further, according to some embodiments, glycidyl methacrylate can be present in an amount of from about any of the foregoing amounts to about any other of the foregoing amounts. Within this range, the thermoplastic resin composition (article) can exhibit good properties in terms of glass adhesion, metal bonding, impact resistance, fluidity, and the like.

In some embodiments, the glycidyl methacrylate-modified polyolefin may include a glycidyl methacrylate-ethylene copolymer, a glycidyl methacrylate-methyl acrylateethylene copolymer, and combinations thereof.

In some embodiments, the glycidyl methacrylate-modified polyolefin may have a melt-flow index of 2 g/10 min to 8 g/10 min, for example, 3 g/10 min to 7 g/10 min, as measured under conditions of 190°C and 2.16 kg in accordance with ASTM D1238. In some embodiments, the glycidyl methacrylate-modified polyolefin may have a melt-flow index of about 2, 3, 4, 5, 6, 7, or 8 g/10 min. Further, according to some embodiments, the glycidyl methacrylate-modified polyolefin may have a melt-flow index of from about any of the foregoing melt-flow index to about any other of the foregoing melt-flow index. Within this range, the thermoplastic resin composition (article) can exhibit good glass adhesion, impact resistance, and the like.

In some embodiments, the glycidyl methacrylate-modified polyolefin may be present in an amount of 1 part by weight to 9 parts by weight, for example, 2 parts by weight to 8.2 parts by weight, relative to 100 parts by weight of the polybutylene terephthalate resin. In some embodiments, the thermoplastic resin composition may include the glycidyl methacrylate-modified polyolefin in an amount of about 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, 5, 5.1, 5.2, 5.3, 5.4, 5.5, 5.6, 5.7, 5.8, 5.9, 6, 6.1, 6.2, 6.3, 6.4, 6.5, 6.6, 6.7, 6.8, 6.9, 7, 7.1, 7.2, 7.3, 7.4, 7.5, 7.6, 7.7, 7.8, 7.9, 8, 8.1, 8.2, 8.3, 8.4, 8.5, 8.6, 8.7, 8.8, 8.9, or 9 parts by weight, relative to about 100 parts by weight of the polybutylene terephthalate resin. Further, according to some embodiments, the glycidyl methacrylate-modified polyolefin can be present in an amount of from about any of the foregoing amounts to about any other of the foregoing amounts. If the content of the glycidyl methacrylate-modified polyolefin is less than 1 part by weight relative to 100 parts by weight of the polybutylene terephthalate resin, the thermoplastic resin composition can suffer from deterioration in glass adhesion, impact resistance, and the like, and if the content of the glycidyl methacrylate-modified polyolefin exceeds 9 parts by weight, the thermoplastic resin composition can suffer from deterioration in metal bonding, fluidity, injection processability, and the like.

In some embodiments, the glass fiber and the glycidyl methacrylate-modified polyolefin may be present in a weight ratio (C:D) of 1:0.02 to 1:0.12, for example, 1:0.02 to 1:0.10. In some embodiments, the glass fiber and the glycidyl methacrylate-modified polyolefin may be present in a weight ratio (C:D) of about 1:0.02, 1:0.03, 1:0.04, 1:0.05, 1:0.06, 1:0.07, 1:0.08, 1:0.09, 1:0.10, 1:0.11, or 1:0.12. If the weight ratio of the glass fiber to the glycidyl methacrylate-modified polyolefin is less than 1:0.02, the thermoplastic resin composition can suffer from deterioration in glass adhesion, metal bonding, impact resistance, and the like, and if the weight ratio of the glass fiber to the glycidyl methacrylate-modified polyolefin exceeds 1:0.12, the thermoplastic resin composition can suffer from deterioration in impact resistance, fluidity, injection processability, and the like.

The thermoplastic resin composition according to one embodiment of the present invention may further include additives used in typical thermoplastic resin compositions. Examples of the additives may include flame retardants, antioxidants, anti-dripping agents, lubricants, release agents, nucleating agents, antistatic agents, stabilizers, pigments, dyes, and mixtures thereof, without being limited thereto. In the thermoplastic resin composition, the additives may be present in an amount of 0.001 to 40 parts by weight, for example, 0.1 to 10 parts by weight, relative to 100 parts by weight of the polybutylene terephthalate resin. In some embodiments, the thermoplastic resin composition may include the additive(s) in an amount of about 0.001, 0.002, 0.003, 0.004, 0.005, 0.006, 0.007, 0.008, 0.009, 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or 40 parts by weight, relative to about 100 parts by weight of the polybutylene terephthalate resin. Further, according to some embodiments, the additive(s) can be present in an amount of from about any of the foregoing amounts to about any other of the foregoing amounts.

The thermoplastic resin composition according to one embodiment of the present invention may be prepared in pellet form by mixing the aforementioned components, followed by melt extrusion in a typical twin-screw extruder at 240°C to 300°C, for example, 260°C to 290°C.

In some embodiments, the thermoplastic resin composition may have an average potential energy of 700 mJ to 870 mJ, for example, 730 mJ to 860 mJ, as calculated by averaging potential energy values measured upon detachment of five specimens each having a size of 50 mm × 50 mm × 4 mm from a glass substrate having a size of 25 mm × 25 mm × 3 mm by dropping a dart having a weight of 50 g to 900 g onto the specimens from a height of 5 cm to 100 cm according to the DuPont drop test method, in which a urethane-based bonding agent (H.B. Fuller Co., Ltd., EH9777BS) is applied to a size of 15 mm × 15 mm × 1 mm on each of the specimens at 110°C and the glass substrate is bonded to the bonding agent, followed by curing under conditions of 25°C and 50% RH for 72 hours. In some embodiments, the thermoplastic resin composition may have an average potential energy of about 700, 701, 702, 703, 704, 705, 706, 707, 708, 709, 710, 711, 712, 713, 714, 715, 716, 717, 718, 719, 720, 721, 722, 723, 724, 725, 726, 727, 728, 729, 730, 731, 732, 733, 734, 735, 736, 737, 738, 739, 740, 741, 742, 743, 744, 745, 746, 747, 748, 749, 750, 751, 752, 753, 754, 755, 756, 757, 758, 759, 760, 761, 762, 763, 764, 765, 766, 767, 768, 769, 770, 771, 772, 773, 774, 775, 776, 777, 778, 779, 780, 781, 782, 783, 784, 785, 786, 787, 788, 789, 790, 791, 792, 793, 794, 795, 796, 797, 798, 799, 800, 801, 802, 803, 804, 805, 806, 807, 808, 809, 810, 811, 812, 813, 814, 815, 816, 817, 818, 819, 820, 821, 822, 823, 824, 825, 826, 827, 828, 829, 830, 831, 832, 833, 834, 835, 836, 837, 838, 839, 840, 841, 842, 843, 844, 845, 846, 847, 848, 849, 850, 851, 852, 853, 854, 855, 856, 857, 858, 859, 860, 861, 862, 863, 864, 865, 866, 867, 868, 869, or 870 mJ. Further, according to some embodiments, the thermoplastic resin composition may have an average potential energy of from about any of the foregoing average potential energies to about any other of the foregoing average potential energies.

In some embodiments, the thermoplastic resin composition may have a metal bonding strength of 35 MPa to 50 MPa, for example, 35 MPa to 45 MPa, as measured on an aluminum-based metal specimen in accordance with ISO 19095. In some embodiments, the thermoplastic resin composition may have a metal bonding strength of about 35, 36, 37, 38, 39, 40, 41, 42, 43, 44, 45, 46, 47, 48, 49, or 50 MPa. Further, according to some embodiments, the thermoplastic resin composition may have a metal bonding strength of from about any of the foregoing metal bonding strengths to about any other of the foregoing metal bonding strengths.

In some embodiments, the thermoplastic resin composition may have a notched Izod impact strength of 9 kgf·cm/cm to 20 kgf cm/cm, for example, 9 kgf·cm/cm to 15 kgf cm/cm, as measured on a 1/8" thick specimen in accordance with ASTM D256. In some embodiments, the thermoplastic resin composition may have a notched Izod impact strength of about 9, 10, 11, 12, 13, 14, 15, 16, 17, 18, 19, or 20 kgf·cm/cm. Further, according to some embodiments, the thermoplastic resin composition may have a notched Izod impact strength of from about any of the foregoing notched Izod impact strengths to about any other of the foregoing notched Izod impact strengths.

An article according to the present invention is formed of the thermoplastic resin composition set forth above. The thermoplastic resin composition may be prepared in pellet form. The prepared pellets may be produced into various articles (products) by various molding methods, such as injection molding, extrusion, vacuum molding, casting, and the like. These molding methods are well known to those skilled in the art. The articles have good properties in terms of glass adhesion, metal bonding, fluidity, impact resistance, and balance therebetween, and are useful as interior/exterior materials of electric/electronic products, interior/exterior materials of automobiles, interior/exterior materials of portable electronic communication devices, and the like.

A composite material according to the present invention may include a plastic member as the article; a metal member adjoining the plastic member; and a glass member bonded to the plastic member.

In some embodiments, the plastic member may directly adjoin the metal member without a bonding agent therebetween. For example, the plastic member and the metal member may be integrally formed with each other through insert-injection molding.

In some embodiments, the metal member may include at least one metal selected from among aluminum, titanium, iron, and zinc.

In some embodiments, the plastic member and the glass member may be bonded to each other through a bonding agent. For example, after processing a product (the plastic member and the metal member) manufactured by insert-injection molding into a desired shape through a CNC process or the like, a glass member may be bonded thereto.

Next, the present invention will be described in more detail with reference to examples. However, it should be noted that these examples are provided for illustration only and should not be construed in any way as limiting the invention.

**EXAMPLE**

Details of components used in Examples and Comparative Examples are as follows.

(A) Polybutylene terephthalate resin

A polybutylene terephthalate resin (PBT, Manufacturer: Shinkong Synthetic Fibers, Product Name: Shinite K006, Inherent viscosity [η]: about 1.3 dl/g) was used.

(B) Polycarbonate resin

A bisphenol-A polycarbonate resin (PC, Manufacturer: Lotte Chemical Co., Ltd., Weight average molecular weight: about 25,000 g/mol) was used.

(C) Glass fiber

Flat type glass fiber (Manufacturer: Nittobo, Product Name: CSG 3PA-820, short-side length: about 7 μm, Aspect ratio on cross-section: about 4, Pre-processing length: about 3 mm) was used.

(D) Glycidyl methacrylate-modified polyolefin

(D1) Glycidyl methacrylate-modified polyolefin (Manufacturer: Arkema, Product Name: AX-8900, Glycidyl methacrylate content: 8 wt%) was used.

(D2) Glycidyl methacrylate-modified polyolefin (Manufacturer: Arkema, Product Name: AX-8670T, Glycidyl methacrylate content: 9 wt%) was used.

(D3) Glycidyl methacrylate-modified polyolefin (Manufacturer: Sumitomo, Product Name: BF-7B, Glycidyl methacrylate content: 12 wt%) was used.

(D4) Glycidyl methacrylate-modified polyolefin (Manufacturer: Arkema, Product Name: AX-8750, Glycidyl methacrylate content: 5 wt%) was used.

(E) An ethylene/methyl acrylate copolymer (Manufacturer: DuPont, Product Name: Elvaloy AC1330) was used.

**Examples 1 to 12 and Comparative Examples 1 to 9**

The aforementioned components were mixed in amounts as listed in Tables 1 to 4, followed by extrusion at 260°C, thereby preparing a thermoplastic resin composition in pellet form. Here, extrusion was performed using a twin-screw extruder (L/D: 44, Φ: 45 mm). The prepared pellets were dried at 80°C for 4 hours or more and then subjected to injection molding using a 6 oz. injection machine (molding temperature: about 270°C, mold temperature: about 120°C), thereby preparing specimens. The prepared specimens were evaluated as to the following properties. Results are shown in Tables 1, 2, 3 and 4.

Property Evaluation

(1) Glass adhesive strength (unit: mJ): Average potential energy was calculated by averaging potential energy values measured upon detachment of five specimens each having a size of 50 mm × 50 mm × 4 mm from a glass substrate having a size of 25 mm × 25 mm × 3 mm by dropping a dart having a weight of 50 g to 900 g onto the specimens from a height of 5 cm to 100 cm according to the DuPont drop test method, in which a urethane-based bonding agent (H.B. Fuller Co., Ltd., EH9777BS) was applied to a size of 15 mm × 15 mm × 1 mm on each of the specimens at 110°C and the glass substrate was bonded to the bonding agent, followed by curing at 25°C and at 50% RH for 72 hours.

$$Potential\ energy\ (Ep) = Mass\ (dart\ weight\ upon\ detachment) \times gravitational$$
$$acceleration\ (9.8) \times (dart\ height\ upon\ detachment))$$

(2) Metal bonding strength (unit: MPa): Bonding strength was measured after bonding an aluminum-based metal specimen to a specimen of the thermoplastic resin composition through insert-inj ection molding in accordance with ISO 19095. Here, the metal specimen was an aluminum-based metal specimen subjected to TRI surface treatment of Geo Nation Co., Ltd. to facilitate bonding between the metal specimen and the resin specimen. Each of the metal specimen and the resin specimen had a size of 1.2 cm × 4 cm × 0.3 cm and bonding strength therebetween was measured after bonding the specimens to have a bonding area of 1.2 cm × 0.3 cm.
(3) Notched Izod impact resistance (unit: kgf cm/cm): Notched Izod impact strength was measured on a 1/8" thick specimen in accordance with ASTM D256.

Table 1

| | Example | | | | | |
|---|---|---|---|---|---|---|
| | 1 | 2 | 3 | 4 | 5 | 6 |
| (A) (parts by weight) | 100 | 100 | 100 | 100 | 100 | 100 |
| (B) (parts by weight) | 5 | 14.3 | 30 | 14.3 | 14.3 | 14.3 |
| (C) (parts by weight) | 89.8 | 89.8 | 89.8 | 70 | 110 | 89.8 |
| (D1) (parts by weight) | 6.1 | 6.1 | 6.1 | 6.1 | 6.1 | 2 |
| (D2) (parts by weight) | - | - | - | - | - | - |
| (D3) (parts by weight) | - | - | - | - | - | - |
| (D4) (parts by weight) | - | - | - | - | - | - |
| (E) (parts by weight) | - | - | - | - | - | - |
| Glass adhesive strength (mJ) | 763 | 816 | 843 | 839 | 753 | 741 |
| Metal bonding strength (MPa) | 42.1 | 41.0 | 38.1 | 43.8 | 36.8 | 38.7 |
| Notched Izod impact strength (kgf·cm/cm) | 9.1 | 11.3 | 13.2 | 9.2 | 14.8 | 9.3 |

Table 2

| | Example | | | | | |
|---|---|---|---|---|---|---|
| | 7 | 8 | 9 | 10 | 11 | 12 |
| (A) (parts by weight) | 100 | 100 | 100 | 100 | 100 | 100 |

(continued)

| | Example | | | | | |
|---|---|---|---|---|---|---|
| | 7 | 8 | 9 | 10 | 11 | 12 |
| (B) (parts by weight) | 14.3 | 14.3 | 14.3 | 14.3 | 14.3 | 14.3 |
| (C) (parts by weight) | 89.8 | 89.8 | 89.8 | 89.8 | 89.8 | 89.8 |
| (D1) (parts by weight) | 8.2 | 4.1 | - | - | - | - |
| (D2) (parts by weight) | - | - | 4.1 | 6.1 | - | - |
| (D3) (parts by weight) | - | - | - | - | 6.1 | - |
| (D4) (parts by weight) | - | - | - | - | - | 6.1 |
| (E) (parts by weight) | - | - | - | - | - | - |
| Glass adhesive strength (mJ) | 835 | 787 | 776 | 802 | 768 | 766 |
| Metal bonding strength (MPa) | 42.3 | 39.9 | 40.2 | 41.4 | 39.5 | 38.4 |
| Notched Izod impact strength (kgf·cm/cm) | 12.2 | 9.8 | 10.2 | 11.6 | 9.9 | 10.7 |

Table 3

| | Comparative Example | | | |
|---|---|---|---|---|
| | 1 | 2 | 3 | 4 |
| (A) (parts by weight) | 100 | 100 | 100 | 100 |
| (B) (parts by weight) | 1 | 35 | 14.3 | 14.3 |
| (C) (parts by weight) | 89.8 | 89.8 | 50 | 130 |
| (D1) (parts by weight) | 6.1 | 6.1 | 6.1 | 6.1 |
| (D2) (parts by weight) | - | - | - | - |
| (D3) (parts by weight) | - | - | - | - |
| (D4) (parts by weight) | - | - | - | - |
| (E) (parts by weight) | - | - | - | - |
| Glass adhesive strength (mJ) | 680 | 848 | 852 | 689 |
| Metal bonding strength (MPa) | 41.1 | 32.4 | 43.2 | 34.4 |
| Notched Izod impact strength (kgf·cm/cm) | 8.7 | 13.5 | 7.3 | 14.9 |

Table 4

| | Comparative Example | | | | |
|---|---|---|---|---|---|
| | 5 | 6 | 7 | 8 | 9 |
| (A) (parts by weight) | 100 | 100 | 100 | 100 | 100 |
| (B) (parts by weight) | 14.3 | 14.3 | 14.3 | 14.3 | 14.3 |
| (C) (parts by weight) | 89.8 | 89.8 | 89.8 | 60 | 110 |
| (D1) (parts by weight) | 0.5 | 10 | - | 8.2 | 2 |
| (D2) (parts by weight) | - | - | - | - | - |
| (D3) (parts by weight) | - | - | - | - | - |
| (D4) (parts by weight) | - | - | - | - | - |

(continued)

| | Comparative Example | | | | |
|---|---|---|---|---|---|
| | 5 | 6 | 7 | 8 | 9 |
| (E) (parts by weight) | - | - | 6.1 | - | - |
| Glass adhesive strength (mJ) | 686 | 823 | 691 | 730 | 692 |
| Metal bonding strength (MPa) | 39.8 | 33.7 | 34.1 | 39.8 | 32.1 |
| Notched Izod impact strength (kgf·cm/cm) | 6.3 | 15.2 | 12.3 | 7.2 | 7.5 |

From the result, it could be seen that the thermoplastic resin composition according to the present invention exhibited good properties in terms of glass adhesion, metal bonding (metal bonding strength), impact resistance (notched Izod impact strength), and balance therebetween.

Conversely, it could be seen that the thermoplastic resin composition of Comparative Example 1 prepared using an insufficient amount of the polycarbonate resin exhibited deterioration in glass adhesion, impact resistance, and the like; the thermoplastic resin composition of Comparative Example 2 prepared using an excess of the polycarbonate resin exhibited deterioration in metal bonding and the like; the thermoplastic resin composition of Comparative Example 3 prepared using an insufficient amount of the glass fiber exhibited deterioration in impact resistance and the like; and the thermoplastic resin composition of Comparative Example 4 prepared using an excess of the glass fiber exhibited deterioration in glass adhesion, metal bonding, and the like. In addition, it could be seen that the thermoplastic resin composition of Comparative Example 5 prepared using an insufficient amount of the glycidyl methacrylate-modified polyolefin exhibited deterioration in glass adhesion, impact resistance, and the like; and the thermoplastic resin composition of Comparative Example 6 prepared using an excess of the glycidyl methacrylate-modified polyolefin exhibited deterioration in metal bonding and the like. It could be seen that the thermoplastic resin composition of Comparative Example 7 prepared using the ethylene/methyl acrylate copolymer (E) instead of the glycidyl methacrylate-modified polyolefin exhibited deterioration in glass adhesion, metal bonding, and the like. Further, it could be seen that, even with the glass fiber and the glycidyl methacrylate-modified polyolefin within the content ranges according to the present invention, the thermoplastic resin composition (Comparative Example 8) having a weight ratio (C:D1) (1:0.137) exceeding 1:0.12 exhibited deterioration in impact resistance and the like, and the thermoplastic resin composition (Comparative Example 9) having a weight ratio (C:D1) (1:0.018) less than 1:0.02 exhibited deterioration in glass adhesion, metal bonding, impact resistance, and the like.

## Claims

1.   A thermoplastic resin composition comprising:

   100 parts by weight of a polybutylene terephthalate resin;
   3 parts by weight to 33 parts by weight of a polycarbonate resin;
   60 parts by weight to 120 parts by weight of glass fiber; and
   1 part by weight to 9 parts by weight of a glycidyl methacrylate-modified polyolefin,
   wherein the glass fiber and the glycidyl methacrylate-modified polyolefin are present in a weight ratio of 1:0.02 to 1:0.12.

2.   The thermoplastic resin composition according to claim 1, wherein the polybutylene terephthalate resin has an inherent viscosity [η] of 0.5 dl/g to 1.5 dl/g, as measured in accordance with ASTM D2857.

3.   The thermoplastic resin composition according to claim 1 or claim 2, wherein the polycarbonate resin has a weight average molecular weight of 10,000 g/mol to 50,000 g/mol, as measured by gel permeation chromatography (GPC).

4.   The thermoplastic resin composition according to any one of claims 1 to 3, wherein the glycidyl methacrylate-modified polyolefin comprises 4 wt% to 15 wt% of glycidyl methacrylate.

5.   The thermoplastic resin composition according to any one of claims 1 to 4, wherein the thermoplastic resin composition has an average potential energy of 700 mJ to 870 mJ, as calculated by averaging potential energy values measured upon detachment of five specimens each having a size of 50 mm × 50 mm × 4 mm from a glass substrate having a size of 25 mm × 25 mm × 3 mm by dropping a dart having a weight of 50 g to 900 g onto the specimens from a height of 5 cm to 100 cm according to the DuPont drop test method, in which a urethane-based bonding agent (H.B. Fuller Co., Ltd., EH9777BS) is applied to a size of 15 mm × 15 mm × 1 mm on each of the specimens at 110°C and the glass substrate is bonded to the bonding agent, followed by curing under conditions of 25°C and 50% RH for 72 hours.

6. The thermoplastic resin composition according to any one of claims 1 to 5, wherein the thermoplastic resin composition has a metal bonding strength of 35 MPa to 50 MPa, as measured on an aluminum-based metal specimen in accordance with ISO 19095.

7. The thermoplastic resin composition according to any one of claims 1 to 6, wherein the thermoplastic resin composition has a notched Izod impact strength of 9 kgf·cm/cm to 20 kgf·cm/cm, as measured on a 1/8" specimen in accordance with ASTM D256.

8. An article formed of the thermoplastic resin composition according to any one of claims 1 to 7.

9. A composite material comprising:

a plastic member as the article according to claim 8;
a metal member adjoining the plastic member; and
a glass member bonded to the plastic member.

Europäisches Patentamt
European Patent Office
Office européen des brevets

# EUROPEAN SEARCH REPORT

Application Number

EP 23 15 5541

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2022/145732 A1 (LOTTE CHEMICAL CORP [KR]) 7 July 2022 (2022-07-07) * claim 1 * ----- | 1 | INV. C08L67/02 C08L23/08 |
| A | US 2015/368458 A1 (SUN XIAOYU [US] ET AL) 24 December 2015 (2015-12-24) * example 1 * ----- | 1-9 | |

TECHNICAL FIELDS SEARCHED (IPC)

C08L
C09J

The present search report has been drawn up for all claims

| Place of search | Date of completion of the search | Examiner |
|---|---|---|
| The Hague | 14 June 2023 | Adigbli, Francis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 5541

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2023

| Patent document cited in search report | | Publication date | Patent family member(s) | | Publication date |
|---|---|---|---|---|---|
| WO 2022145732 | A1 | 07-07-2022 | KR 20220094807 A | | 06-07-2022 |
| | | | WO 2022145732 A1 | | 07-07-2022 |
| US 2015368458 | A1 | 24-12-2015 | CN 106459564 A | | 22-02-2017 |
| | | | EP 3158002 A1 | | 26-04-2017 |
| | | | KR 20170023094 A | | 02-03-2017 |
| | | | US 2015368458 A1 | | 24-12-2015 |
| | | | WO 2015195143 A1 | | 23-12-2015 |

EPO FORM P0459

For more details about this annex : see Official Journal of the European Patent Office, No. 12/82

**EP 4 227 364 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100709878